Europäisches Patentamt

(19) **European Patent Office**

**Office européen des brevets**

(11) Publication number: **0 177 363**
**A2**

(12) # EUROPEAN PATENT APPLICATION

(21) Application number: **85307118.1**

(22) Date of filing: **04.10.85**

(51) Int. Cl.⁴: **B 29 C 37/02**
**B 23 D 79/02**

(30) Priority: **04.10.84 GB 8425139**

(43) Date of publication of application:
**09.04.86 Bulletin 86/15**

(84) Designated Contracting States:
**BE DE FR NL**

(71) Applicant: **FUSION EQUIPMENT LTD**
**Callywhite Lane Dronfield**
**Sheffield S18 6XP(GB)**

(72) Inventor: **Jarvis, Brian**
**138 Stonelow Road**
**Dronfield Sheffield S18 6EP(GB)**

(74) Representative: **Ford, Michael Frederick et al,**
**MEWBURN ELLIS & CO. 2/3 Cursitor Street**
**London EC4A 1BQ(GB)**

(54) **Internal bead removal tool.**

(57) A tool for removing the internal bead which is formed when a pair of synthetic plastics pipes are joined together by fusion.

So that the tool can be used very easily and conveniently, it includes a head end (10) carrying a cutter blade (28) and an operating rod (12) which when turned first causes the cutter blade (28) to cut radially into the bead and then causes the head end (10) to be turned bodily so that the bead is sliced from within the pipe in a single rotation of the tool.

FIG 1.

Croydon Printing Company Ltd.

## Internal bead removal tool.

The invention relates to an internal bead removal tool for use with butt-welded synthetic plastics pipes and other tubular fittings.

It is well known to butt-weld synthetic plastics pipes and other tubular fittings together by bringing them into abutment with the opposite side surfaces of a heating plate and then to remove the heating plate and to urge the two components together in alignment so that they become joined together by fusion. However, by this method there is usually formed a bead of synthetic plastics material both on the inside and on the outside of the pipe or of the pipe portion of the fitting concerned in the region in which the joint has been made and, although this is not generally a problem so far as the external bead is concerned, the bead on the inside surface of the pipe or fitting constitutes a restriction to flow at that point. This is a particularly serious problem in synthetic plastics pipes intended for use as sewerage pipes because such a restriction to flow can initiate a total blockage of the pipe at that point which can be both costly and troublesome to clear. Whenever such a restriction exists, blockage can of course occur again and again.

The invention as claimed is intended to provide a remedy. It solves the problem of how to design a tool by means of which the internal bead referred to can quickly and easily be removed.

The advantage offered by the invention is that by its use no restriction to flow is caused and blockages resulting from such local restrictions are unlikely to occur.

One way of carrying out the invention is described in detail below with reference to drawings which illustrate by way of example only, specific embodiments, of which:-

Figure 1 is a diagrammatic view of a bead removal tool embodying the invention, shown in use,

Figure 2 is an end view in the direction of arrow 2 in Figure 1, the tool having moved around slightly from the position in which it is shown in Figure 1,

Figure 3 is a part sectional view of a head end of the tool on the line 3-3 in Figure 2,

Figure 4 is a view similar to Figure 2 of a modified form of tool embodying the invention,

Figure 5 is a part sectional view of a head end of the tool on the line 5-5 in Figure 4, and

Figure 6 is an exploded view of a part of the tool which will presently be described.

0177363

- 3 -

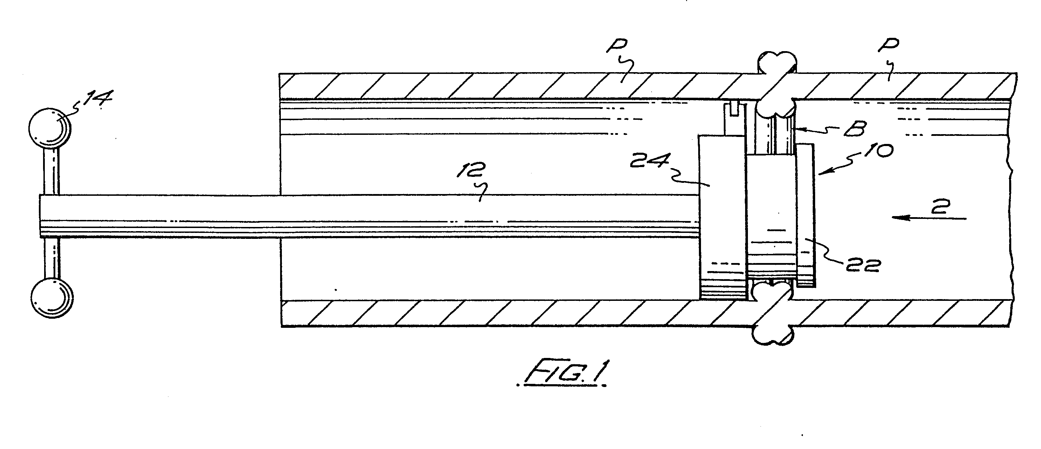

Referring now to Figure 1 of the drawings, the internal bead removal tool there illustrated is shown in use for removing the bead B which has been formed as a pair of synthetic plastics pipes P have been joined together by fusion. As shown, the tool has a head end generally indicated 10, an operating rod 12 and a handle 14 at an outer end of the operating rod.

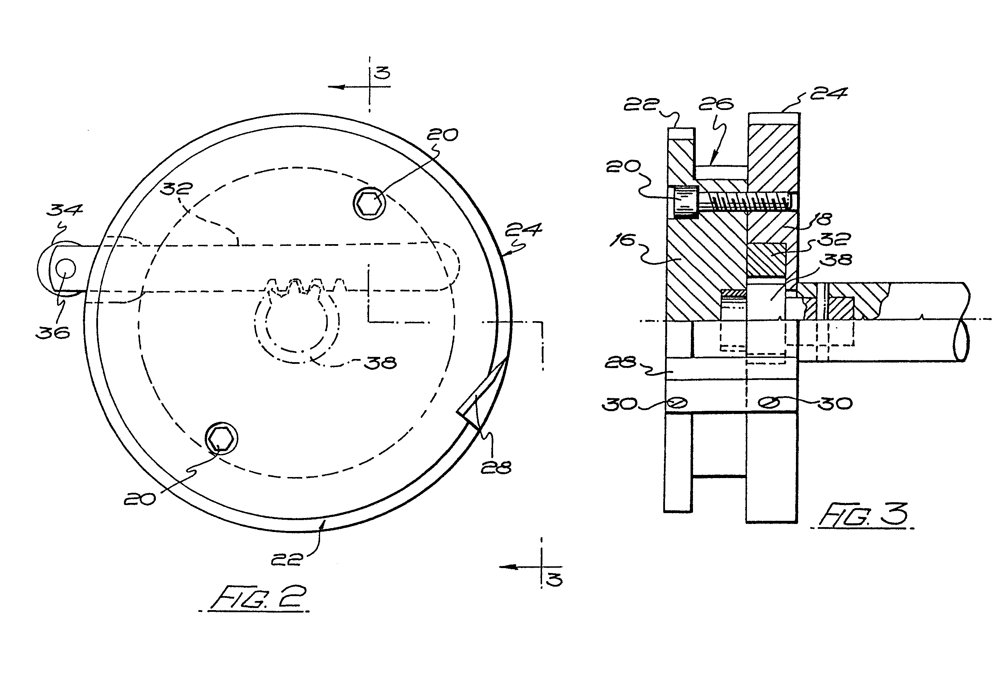

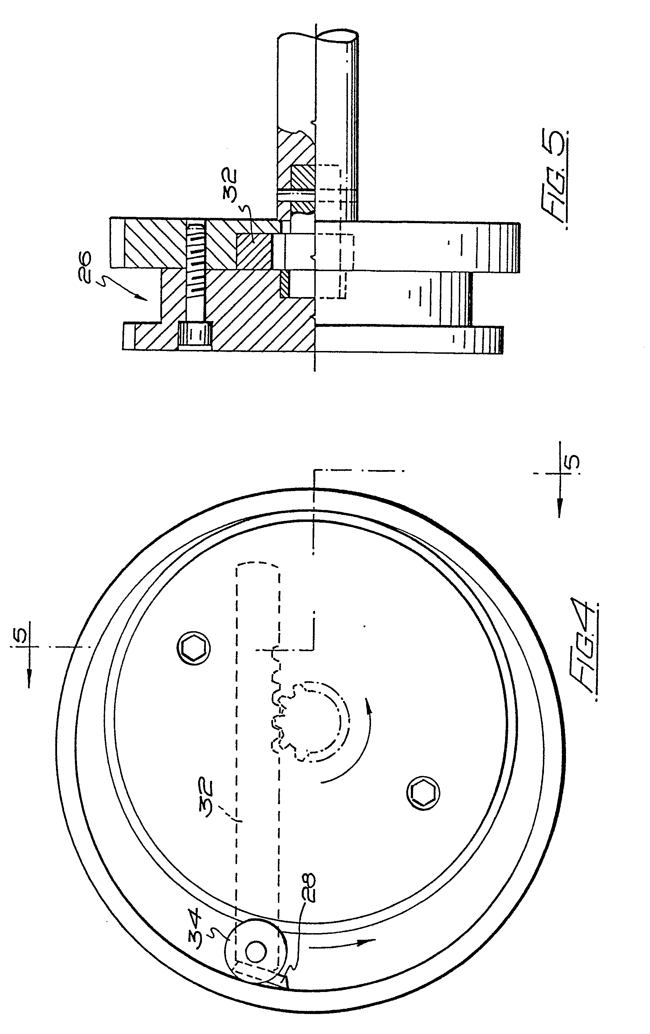

Referring now in particular to Figures 2 and 3 of the drawings, the head end of the tool has a two-part body 16 and 18 held together by a pair of cap head screws 20, the two parts of the body together defining a spaced pair of discs 22 and 24 of slightly different diameters with a circumferential slot 26 between them. A cutter blade 28 spans the axial length of the body, being seated at its opposite ends in aligned notches in the peripheries of the discs 22 and 24 and secured in position by a pair of screws 30. As shown in Figure 2, the cutting edge of the blade coincides with the periphery of the disc 24.

The body part 18 is slotted and slidably accommodates a toothed rack 32 one end of which is forked and carries a roller 34, the latter being freely rotatable on a pin 36. The rack engages a toothed operating pinion 38 which is fixedly connected to the operating rod, and the arrangement is such that when the operating rod is rotated relative to the body part the rack is either extended outwards of the body part or retracted into it depending on the direction of rotation.  It will be observed that the roller 34 is located diametrically opposite the cutter blade 28.  The slot in which the toothed rack is slidably located is not quite radial of the body part but sufficiently so for the roller to be almost exactly diametrically opposite the cutting edge of the blade throughout the range of operative movement of the rack.

When the tool is to be used to remove the internal bead formed at the joint interface between a pair of butt-welded synthetic plastics pipes, with the toothed rack fully retracted the head end of the tool is slid along the smooth interior surface of one of the pipes, riding on the periphery of the disc 24, until the smaller disc 22 has passed freely over the bead to be removed and the side surface of the disc 24 has abutted against it as shown in Figure 1.  With the head end of the tool in this position, the operating rod 12 is rotated by the handle 14 in a clockwise direction.  This has the effect of extending the rack outwards of the body so that the roller 34 is brought into engagement with the smooth interior surface of the said one of the pipes, and further rotation of the operating rod then causes the cutter blade to cut radially into the bead to be removed. When the surface of the disc 24 immediately adjacent the cutter blade abuts against the smooth interior surface of the pipe, the blade will have cut through the full radial thickness of the bead and of course cannot be forced any further outwards by rotation of the operating rod. Consequently, further rotation of the operating rod causes the head end 10 of the tool to be rotated bodily so that the internal bead is sliced away in a single rotary movement of the tool.

When the bead has been sliced away from the internal wall of the pipe, the control rod can be rotated in anti-clockwise direction to retract the toothed rack into the body. The head end of the tool can then be withdrawn from the pipe together with the bead which will be located in the circumferential slot 26.

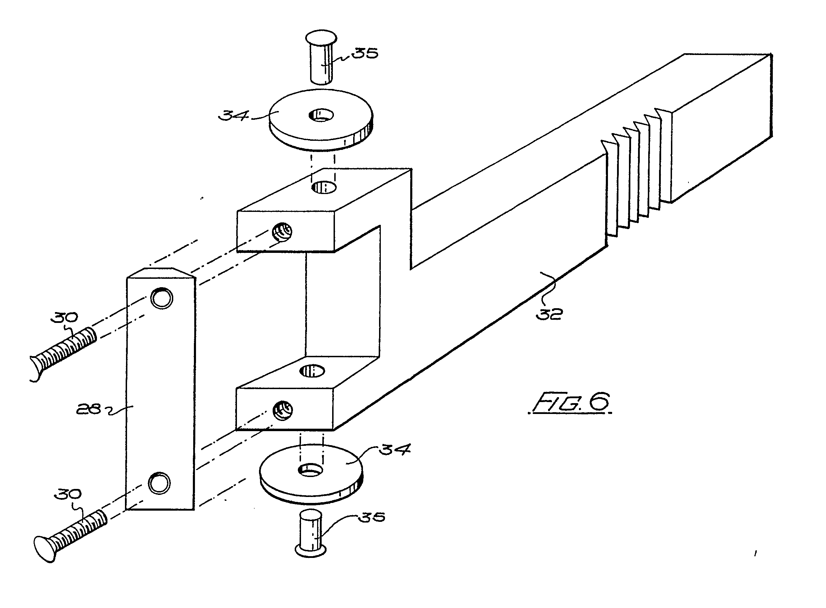

Thus there is provided a tool by means of which the internal bead formed when a pair of synthetic plastics pipes are butt-welded together can very quickly and easily be removed. However, various modifications may be made. For example, in Figures 4 to 6 there is illustrated a modified form of tool in which, although it is used in a very similar manner to the tool described above differs therefrom in the fact that the cutter blade 28 is carried at the outer end of the toothed rack. As perhaps best seen in Figure 6, the cutter blade spans the space across a bifurcated end of the toothed rack, being secured thereto by means of a pair of screws 30. A pair of spaced rollers 34,34 which are also carried by the rack are arranged to flank the cutter blade, the rollers being rotatably mounted on respective studs 35,35. As shown in Figure 4, the cutting edge of the cutter blade coincides with the peripheries of the rollers. Consequently, when the tool is in use, the rollers act as depth of cut stops as they contact the interior wall surfaces of the pipe at the opposite sides of the internal bead to be removed.

It will be understood that, in use of this modified version of the tool since the slot in the outer end of the toothed rack is in line with the circumferential slot 26 in the body part, the bead which is cut from within a synthetic plastics pipe in the manner described can be withdrawn from the pipe located in said circumferential slot.

Various other modifications may be made. For example, the means whereby the roller or rollers 34 can be urged radially outwards of the body to cause the cutter blade to cut radially into the bead need not necessarily include a toothed rack. Such means could alternatively include an eccentric mechanism, or a pin and slot mechanism, or a simple link mechanism whereby the required movement is obtained, that is to say whereby a first rotational movement of the operating rod causes the cutter blade to cut radially into the bead and, when the bead has been fully cut through, further rotational movement of the operating rod causes the head end of the tool to be rotated bodily. It will also be understood that, in the first described embodiment, instead of having only a single roller diametrically opposite the cutter blade, the tool could have a pair of such rollers spaced apart circumferentially of the body part and moving radially outwards and radially inwards in unison somewhat in the manner of the second described embodiment. Instead of a roller or rollers, the tool could be provided with at least one radially adjustable slider element for engaging the interior wall surface of the pipe from which the internal bead is to be removed.

CLAIMS:

1. An internal bead removal tool for use with butt-welded synthetic plastics pipes and other tubular fittings, the tool having a head end (10) carrying a cutter blade (28) and including a body part located at one end of an operating rod (12), characterised in that a portion of the body part constitutes an abutment surface which can be brought into contact with a side surface of the bead to be removed so that the cutter blade (28) is thereby located at a position radially within the bead, means being provided to act radially outwards of the body part in response to a first rotary movement of the operating rod so that the cutter blade (28) is caused to cut radially into the bead to be removed, the arrangement being such that when the cutter blade (28) has cut through the full radial thickness of the bead further rotation of the operating rod (12) causes the head end (10) of the tool to be rotated bodily so that the internal bead is sliced away in a single rotary movement of the tool.

2. An internal bead removal tool as claimed in claim 1, further characterised in that the means provided to act radially outwards of the body part in response to a first rotary movement of the operating rod (12) includes a toothed rack (32) engaging a pinion (38) fixedly connected to the operating rod (12) an end of the rack (32) being provided with means for engaging the interior wall surface of the pipe from which the internal bead is to be removed.

3.     An internal bead removal tool as claimed in claim 2, further characterised in that the means provided at the end of the toothed rack (32) for engaging the interior wall surface of the pipe from which the internal bead is to be removed are constituted by at least one freely rotatable roller (34).

4.     An internal bead removal tool as claimed in any one of the preceding claims, further characterised in that the body part carries the cutter blade (28) and includes a spaced pair of discs (22 and 24) of different diameter with a circumferential slot (26) between them, the cutter blade (28) spanning the axial length of the body and its cutting edge coinciding with the periphery of the larger disc (24).

5.     An internal bead removal tool as claimed in any one of claims 1 to 3, further characterised in that the cutter blade (28) is carried by the means provided to act radially outwards of the body part in response to a first rotary movement of the operating rod (12).

6.    An internal bead removal tool as claimed in claim 5, further characterised in that the cutter blade (28) spans the space across a bifurcated outer end of the toothed rack (32) a pair of spaced rollers (34) which are also carried by the rack flanking the cutter blade (28) and the cutting edge of the latter coinciding with the peripheries of said rollers so that the rollers can act as depth of cut stops as they contact the interior wall surfaces of the pipe at the opposite sides of the internal bead to be removed.

FIG.1.

FIG. 2

FIG. 3

2/4

0177363

FIG.4

FIG.5

34

32

28

26

32

5

5

3|4

0177363

*FIG.6*

35

34

30

28

32

30

34

35

4/4

0177363